## Europäisches Patentamt

## European Patent Office

## Office européen des brevets

(19)

(11) Numéro de publication: **0 016 688**
**B1**

(12) **FASCICULE DE BREVET EUROPEEN**

(45) Date de publication du fascicule du brevet:
**08.09.82**

(51) Int. Cl.³: **B 28 D 7/00**, B 23 D 47/00

(21) Numéro de dépôt: **80400324.2**

(22) Date de dépôt: **12.03.80**

(54) **Dispositif stabilisateur pour un disque diamanté rotatif dans une machine à travailler la pierre.**

(30) Priorité: **23.03.79 FR 7907374**

(43) Date de publication de la demande:
**01.10.80 Bulletin 80/20**

(45) Mention de la délivrance du brevet:
**08.09.82 Bulletin 82/36**

(84) Etats contractants désignés:
**AT BE CH DE GB IT NL SE**

(56) Documents cités:
**DE-A-2 623 724**
**US-A-3 674 065**
**US-A-3 918 334**

(73) Titulaire: **GRANITERIE PETITJEAN FILS, "Les Ecorces",
F-88250 La Bresse, Vosges (FR)**

(72) Inventeur: **Petitjean, Jean-Paul, 59, rue du Hohneck, La
Bresse, Vosges (FR)**
Inventeur: **Petitjean, Marcel, Lambexaire La Bresse,
Vosges (FR)**

(74) Mandataire: **Tony-Durand, Serge, Cabinet
Tony-Durand 22, Boulevard Voltaire, F-75011 Paris (FR)**

ACTORUM AG

## Dispositif stabilisateur pour un disque diamanté rotatif dans une machine à travailler la pierre

La présente invention a pour objet un dispositif stabilisateur pour un disque diamanté rotatif dans une machine à travailler la pierre, en particulier le granit.

Comme on le sait, les machines utilisées dans les graniteries pour débiter ou tronçonner des pierres particulièrement dures comme le granit, comprennent un bâti portant un coulisseau supportant un disque rotatif à périphérie diamantée. Ce disque placé verticalement peut ainsi attaquer le bloc de granit à débiter, au-dessus duquel il est placé, lorsque le coulisseau est déplacé au fur et à mesure de la progression de la coupe.

On connaît des machines de ce genre, par exemple par le brevet FR-A-2 387 107 qui concerne un système stabilisateur du disque pendant sa rotation, par formation de coussins de fluide sur chaque face du disque pendant sa rotation, afin de stabiliser celui-ci.

Ces coussins de fluide sont réalisés grâce à des flasques appliqués sur chaque face du disque, et portés par le bâti de la machine, ces flasques étant positionnés de telle façon que soient réservés entre eux et la face correspondante du disque, des intervalles suffisants pour la formation de coussins de fluide entre les flasques et le disque. La face de chaque flasque tournée vers le disque est creusée d'une alvéole dans laquelle débouche une canalisation d'alimentation en fluide, notamment de l'eau, raccordée à une source de fluide sous pression, la moitié supérieure du disque diamanté étant montée à l'intérieur d'un carter solidaire du coulisseau mobile.

Un tel dispositif stabilisateur donne entière satisfaction lorsque le disque est à l'intérieur des limites de tolérance de voile, les oscillations et vibrations du disque observées avec les machines antérieures étant alors supprimées. Par contre, si le disque est légèrement voilé, la partie supérieure de celui-ci est correctement maintenue, mais on observe que sa partie inférieure oscille parallèlement à l'axe du disque en raison précisément du voile, ce qui est nuisible au bon démarrage des coupes.

On connaît également par le brevet DE-A-26 23 724 un dispositif stabilisateur pour un disque diamanté rotatif destiné à travailler le granit, pourvu de flasques appliqués sur les deux faces du disque avec formation de coussins de fluide stabilisateurs entre les flasques et le disque. Les flasques peuvent recouvrir la presque totalité de la surface du disque en fonction de la profondeur de coupe voulue.

Toutefois ce dispositif, s'il permet de stabiliser effectivement le disque, présente de graves inconvénients consistant dans le fait que, lorsque les flasques s'étendent sur la presque totalité du disque ou sur la plus grande partie de celui-ci, la profondeur de coupe possible maximum est corrélativement très faible. Dans ces conditions, il faut à chaque profondeur de coupe, un système de flasques correspondant, ce qui rend malaisée et onéreuse l'utilisation du dispositif.

L'invention a pour but de remédier à ces inconvénients en réalisant un dispositif stabilisateur muni de flasques mobiles et non plus fixes comme dans les réalisations antérieures, afin de pouvoir se déplacer par rapport au disque pendant que celui-ci s'enfonce dans la pierre à tailler, tout en restant maintenu automatiquement à hauteur à peu près constante au-dessus de la pierre.

On comprend qu'avec de tels flasques mobiles, placés au début de la coupe dans la moitié inférieure du disque, celui-ci reste parfaitement stabilisé, au fur et à mesure qu'il descend dans la pierre.

Le dispositif stabilisateur visé par l'invention comprend un bâti de support du disque monté rotativement autour d'un axe horizontal, un carter porté par le bâti et à l'intérieur duquel est engagé partiellement le disque, le carter et le disque étant déplaçables verticalement, et au moins une paire de flasques disposés sur la moitié inférieure du disque en étant appliquées sur les deux faces de celui-ci avec des intervalles entre le disque et les flasques, suffisants pour la formation de coussins de fluide stabilisateurs entre les flasques et le disque.

Conformément à l'invention, la paire de flasques est montée mobile en sens inverse et simultanément au déplacement du carter et du disque pour maintenir les flasques automatiquement à hauteur à peu près constante au-dessous de la pierre à tailler, au fur et à mesure de l'enfoncement du disque dans celle-ci, par une liaison entre le bâti fixe et les flasques mobiles.

Au début de la coupe, les flasques mobiles sont donc placés dans la partie inférieure du disque, puis tandis que celui-ci s'enfonce dans la pierre, les flasques mobiles se relèvent progressivement par rapport au disque tout en restant à hauteur constante au-dessous de la pierre.

Dans une première forme de réalisation de l'invention, la paire de flasques mobiles est solidaire d'un bras de support monté à pivotement autour de l'axe de rotation du disque. Au fur et à mesure que la coupe de la pierre progresse et que le disque s'enfonce dans celle-ci, le bras de support des flasques mobiles pivote vers le haut, et maintient ces flasques à un niveau à peu près constant.

D'autres particularités et avantages de l'invention apparaîtront au cours de la description qui va suivre. Aux dessins annexés, donnés à titre d'exemple non limitatif, on a représenté un mode de réalisation du dispositif selon l'invention.

— La figure 1 est une vue en élévation simplifiée d'une forme de réalisation du dispositif stabilisateur pour disque diamanté rotatif conforme à l'invention, le disque étant représenté en position haute avant le début d'une coupe.

— La figure 2 est une vue en élévation latérale analogue à la fin d'une coupe, les flasques mobiles étant corrélativement relevés par rapport au disque.

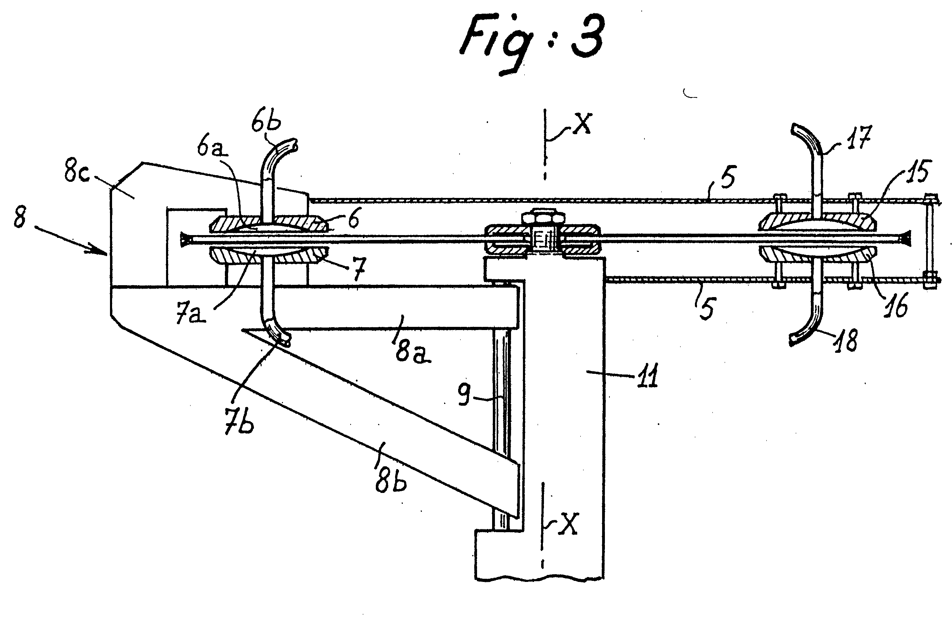

– La figure 3 est une vue en coupe transversale suivant III—III de la figure 2.

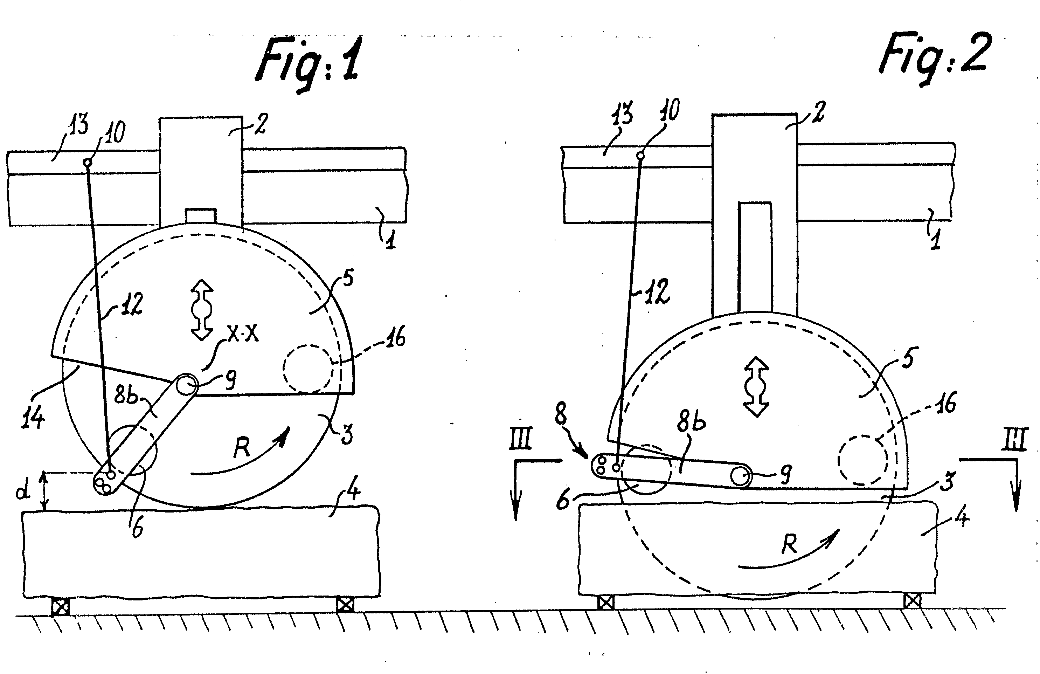

Le dispositif représenté schématiquement à la figure 1, est utilisé dans les graniteries ou marbreries pour débiter et tronçonner les pierres dures telles que le granit.

Il comporte un bâti 1, formant un pont, et dont la structure est analogue à celle de la machine décrite au brevet FR-A-2 387 107. Sur la partie supérieure du bâti 1, est disposé un coulisseau 2 déplaçable en translation d'un côté à l'autre du pont, et auquel est assujetti un disque diamanté rotatif 3. Celui-ci est disposé verticalement de façon que son bord inférieur puisse attaquer un bloc de granit 4 à découper, et sa moitié supérieure est logée dans un carter 5 de support lui-même fixé au coulisseau 2. De façon connue en soi, des moyens non représentés permettent de déplacer le disque 3 et son carter 5 verticalement le long du coulisseau 2, et de faire exécuter à ce dernier des va-et-vient horizontaux sur le bâti 1, pour faire travailler la longueur de granit voulue par le disque 3.

La machine débiteuse représentée à la figure 1 est munie d'un dispositif stabilisateur du disque émanté 3, qui comprend une paire de flasques mobiles 6, 7, disposés sur la moitié inférieure du disque 3.

Les deux flasques 6, 7 présentent chacun, sur leur face tournée vers le disque 3, un alvéole 6a, 7a, qui communique avec un tuyau 6b, 7b d'introduction de fluide sous pression, par exemple de l'eau, entre le flasque correspondant 6, 7 et la face en regard du disque 3.

Les flasques 6, 7 peuvent ainsi être réalisés comme décrit dans le brevet français précité. Ces flasques 6, 7 sont solidaires d'un bras de support 8 monté à pivotement autour de l'axe X—X de rotation du disque 3; le bras est constitué, dans l'exemple représenté, par deux branches 8a, 8b disposées en triangle, dont un côté est parallèle à l'axe X—X, tandis qu'à son sommet opposé à cet axe, est fixée une pièce complémentaire 8c qui porte le flasque 6, le flasque 7 étant fixé à la branche 8a perpendiculaire à l'axe X—X.

Le bras 8 est donc articulé, pas ses deux branches 8a, 8b sur un tourillon 9 porté par un moyeu 11 dont une extrémité pénètre à l'intérieur du carter 5, et porte le disque diamanté 3.

Des moyens sont complémentairement prévus pour maintenir automatiquement les flasques mobiles 6, 7 à hauteur à peu près constante au-dessus de la pierre 4 à tailler, au fur et à mesure de l'enfoncement du disque 3 dans celle-ci, par une liaison entre le bâti fixe 1 et les flasques mobiles 6, 7. Dans l'ensemble représenté, ces moyens sont constitués d'un filin 12, dont une extrémité est fixée à la partie terminale du bras 8, tandis que sa seconde extrémité est fixée à la partie supérieure 13 du bâti 1. Les flasques 6, 7 sont ainsi mobiles en sens inverse et simultanément au déplacement du carter 5 et du disque 3.

Par ailleurs, le carter 5 présente une échancrure radiale 14 sur son bord inférieur, au-dessous du bras pivotant 8, cette échancrure 14 s'étendant sur un secteur angulaire d'environ 15 degrés, dans l'exemple décrit. Cependant, l'amplitude angulaire de l'échancrure 14 peut bien entendu varier, son rôle étant expliqué ci-après.

Le dispositif stabilisateur comporte encore une paire de flasques fixes 15, 16, analogues aux flasques 6, 7, mais montés à l'intérieur du carter 5, à mi-hauteur du disque 3. Les flasques 15, 16, qui sont alimentés en fluide sous pression par des tuyaux 17, 18 s'étendent donc en partie sur la moitié inférieure du disque 3, et sur la moitié supérieure de celui-ci. Cependant, ces flasques sont positionnés au voisinage du bord inférieur du carter 5, et du côté du disque 3 opposé au bras pivotant 8.

La mise en oeuvre du dispositif stabilisateur qui vient d'être décrit est la suivante:

Au début de la coupe d'un bloc de granit 4 par le disque 3, le bras 8 et les flasques 6, 7 sont en position basse, représentée à la figure 1, le plus près possible du bloc 4. Le bras 8 est parfaitement rigide, et doit maintenir les flasques 6, 7 à une distance constance d de la surface du bloc 4 à couper. On envoie le fluide sous pression, par exemple de l'eau dans les tuyaux 6b, 7b, 17, 18 d'alimentation des flasques stabilisateurs 6, 7, 15, 16, et on met en rotation le disque 3 dans le sens indiqué par la flèche R, c'est-à-dire le sens anti-horaire. Le carter 5 et le disque 3 sont déplacés vers le bas le long du coulisseau 2, de façon que le disque 3 attaque le granit du bloc 4. La moitié inférieure du disque 3 est efficacement stabilisée par les flasques 6, 7, dont l'action est complétée par les flasques fixes 15, 16, de telle sorte que si le disque est violé, sa moitié inférieure qui attaque le bloc 4, ne peut osciller ni au début de la coupe, ni pendant celle-ci.

Au fur et à mesure de l'avancement de la coupe, le disque 3 s'enfonce dans le bloc 4, et le bras pivotant 8 est sollicité en rotation vers le haut par le filin 12 relié au point fixe 10 du bâti. Ainsi, le bras 8 et les flasques mobiles 6, 7 pivotent relativement au disque 3 et au carter 5, autour de l'axe du disque 3, ou plus exactement autour du tourillon 9 parallèle à cet axe. En fin de coupe, lorsque le disque 3 est complètement enfoncé dans le bloc 4, le bras 8 est relevé par rapport au capot 5 et au disque 3, et engagé en position haute, dans l'échancrure radiale 14, comme on le voit sur la figure 2. Ainsi, pendant toute l'exécution de la coupe, la distance d entre les flasques mobiles 6, 7 et la surface du bloc de granit 4 reste sensiblement constante, ou varie faiblement.

En fin de coupe, on relève le disque 3 et le carter 5 pour les ramener dans leur position de départ (figure 1), le bras 8 et les flasques 6, 7 pivotant corrélativement par rapport au carter 5 pour revenir dans leur position initiale.

On constate que lorsque le disque 3 est voilé, celui-ci n'oscille que dans sa partie supérieure, c'est-à-dire à l'intérieur du carter 5, et non plus dans sa moitié inférieure qui constitue la zone d'attaque du bloc de granit. Le dispositif stabilisateur ainsi réalisé conserve les mêmes avantages que ceux décrits dans le brevet français précité, notamment en ce qui concerne l'abaissement du niveau sonore du travail et la suppression des petites vibrations.

L'invention n'est pas limitée à la forme de réalisation décrite et peut comporter des variantes d'exécution. Ainsi, il est possible d'installer une seconde paire de flasques fixes sur le carter, sensiblement à mi-hauteur du disque 3. A la place des flesques fixes, on peut placer une seconde paire de flasques mobiles sur un bras articulé autour de l'axe de rotation du disque 3, de préférence symétriquement de la première paire de flasques 6, 7 et de leur bras porteur 8 par rapport au plan vertical diamétral perpendiculaire au disque 3. On peut par ailleurs assurer le pivotement du bras portant les flasques mobiles par tout système équivalent à celui décrit ci-dessus, permettant de maintenir les flasques mobiles à hauteur à peu près constante au-dessous de la surface du bloc à couper.

## Revendications

1. Dispositif stabilisateur pour un disque diamanté (3) rotatif dans une machine à travailler la pierre, en particulier le granit, comprenant un bâti (1) de support du disque (3) monté rotativement autour d'un axe horizontal (X—X), un carter (5) porté par le bâti (1) et à l'intérieur duquel est engagé partiellement le disque (3), le carter (5) et le disque (3) étant déplaçables verticalement, et au moins une paire de flaques (6, 7) disposés sur la moitié inférieure du disque (3) en étant appliqués sur les deux faces de celui-ci, avec des intervalles entre le disque (3) et les flasques (6, 7) suffisants pour la formation de coussins de fluide stabilisateurs, entre les flasques (6, 7) et le disque (3), caractérisé en ce que la paire de flasques (6, 7) est montée mobile en sens inverse et simultanément au déplacement du carter (5) et du disque (3) pour maintenir les flasques automatiquement à une hauteur à peu près constante au-dessus de la pierre (4) à tailler au fur et à mesure de l'enfoncement du disque (3) dans celle-ci, par une liaison entre le bâti fixe (1) et les flasques mobiles (6, 7).

2. Dispositif selon la revendication 1, caractérisé en ce que la paire de flasques mobiles (6, 7) est solidaire d'un bras de support (8) monté à pivotement autour de l'axe de rotation (X—X) du disque (3).

3. Dispositif selon la revendication 2, caractérisé en ce qu'il comprend un filin (12) dont une extrémité est fixée au bras articulé (8) de support des flasques mobiles (6, 7), tandis que sa seconde extrémité est fixée à la partie supérieure (13) du bâti (1), de telle sorte que le bras (8) pivote autour de son articulation en maintenant les flasques (6, 7) à hauteur à peu près constante lorsque le carter (5) et le disque (3) s'abaissent.

4. Dispositif selon l'une des revendications 2 et 3, caractérisé en ce que le carter (5) présente une échancrure radiale (14) au-dessus du bras pivotant (8), dans laquelle ledit bras (8) et les flasques (6, 7) viennent s'engager en position haute extrême, tandis que le disque (3) et le carter (5) sont en position basse extrême.

5. Dispositif selon l'une des revendications 2 à 4, caractérisé en ce qu'une seconde paire de flasques mobiles est montée sur un bras articulé sur l'axe de rotation du disque (3) de préférence symétriquement par rapport à la première paire de flasques mobiles (6, 7) et à leur bras porteur (8) par rapport au plan vertical diamétral perpendiculaire au disque (3).

## Patentansprüche

1. Stabilisierungsvorrichtung für eine sich drehende Diamantscheibe (3) in einer Maschine zur Bearbeitung von Stein, insbesondere Granit, mit einem Tragrahmen (1) für die drehbar um eine Horizontalachse (X-X) angebrachte Scheibe (3), und mit einem von dem Tragrahmen (1) gehaltenen Schutzkasten (5), dessen Inneres zum Teil die Scheibe (3) aufnimmt, wobei das Schutzgehäuse (5) und die Scheibe (3) vertikal verstellbar sind, und mit wenigstens einem Paar von Flanschen (6, 7), welche in der unteren Scheibenhälfte (3) angeordnet und den beiden Scheibenseiten zugewandt sind, und mit Zwischenräumen zwischen der Scheibe (3) und den Flanschen (6, 7), die für die Bildung von stabilisierenden Fluidkissen zwischen den Flanschen (6, 7) und der Scheibe (3) ausreichend sind, dadurch gekennzeichnet, dass das Paar von Flanschen (6, 7) mittels einer Verbindung zwischen dem ortsfesten Tragrahmen (1) und den beweglichen Flanschen (6, 7) bei einer Ortsänderung des Schutzkastens (5) und der Scheibe (3) in entgegengesetzter Richtung dazu und gleichzeitig damit bewegbar angeordnet ist, um damit die Flansche je nach der Eindringtiefe der Scheibe (3) in den Stein automatisch in einer etwa konstanten Höhe über dem zu schneidenden Stein (4) zu halten.

2. Vorrichtung nach Anspruch 1, dadurch gekennzeichnet, dass das Paar von beweglichen Flanschen (6, 7) fest an einem Haltearm (8) angeordnet ist, welcher schwenkbar um die Drehachse (X-X) der Scheibe (3) angebracht ist.

3. Vorrichtung nach Anspruch 2, dadurch gekennzeichnet, dass ein Seil bzw. eine Kette (12) vorgesehen ist, dessen bzw. deren eines Ende an dem schwenkbaren Haltearm (8) der beweglichen Flansche (6, 7) befestigt ist, während das andere Ende an dem oberen Teil (13) des Tragrahmens (1) befestigt ist, derart, dass bei einer Drehung des Haltearms (8) um sein Gelenk bei einem Absenken des Schutzkastens (5) und der Scheibe (3) die Flansche (6, 7) auf etwa konstanter Höhe gehalten werden.

4. Vorrichtung nach einem der Ansprüche 2 und 3, dadurch gekennzeichnet, dass der Schutzkasten (5) oberhalb des Schwenkarms (8) einen radialen Ausschnitt (14) aufweist, in den bei unterer Endlage der Scheibe (3) und des Schutzkastens (5) der Haltearm (8) und die Flansche (6, 7) in ihrer oberen Endlage eingreifen.

5. Vorrichtung nach einem der Ansprüche 2 bis 4, dadurch gekennzeichnet, dass ein zweites Paar beweglicher Flansche auf einem um die Drehachse der Scheibe (3) verschwenkbaren Arm angebracht ist, und zwar vorzugsweise symmetrisch in Bezug auf das erste Paar beweglicher Flansche (6, 7) und deren Tragarm (8) und in Bezug auf die senkrecht zu der Scheibe (3) verlaufende Vertikalebene.

## Claims

1. Stabilizing device for a diamond-set disk (3) rotatably mounted in a machine for working stone and especially granite, comprising a frame (1) for supporting the disk (3) and mounted so as to be capable of rotating about a horizontal axis (X-X), a casing (5) which is carried by the frame (1) and within which the disk (3) is partially engaged, the casing (5) and the disk (3) being vertically displaceable, and at least one pair of cheeks (6, 7) disposed on the lower half of the disk (3) and applied against both faces of this latter with intervals between the disk (3) and the cheeks (6, 7) which are sufficient for the formation of stabilizing fluid cushions between the cheeks (6, 7) and the disk (3), characterized in that the pair of cheeks (6, 7) is mounted so as to be capable of moving in opposite directions and simultaneously with the displacement of the casing (5) and of the disk (3) in order to maintain the cheeks automatically at an approximately constant height above the stone (4) to be cut as the disk (3) penetrates into this latter, by means of a coupling between the stationary frame (1) and the movable cheeks (6, 7).

2. Device in accordance with claim 1, characterized in that the pair of movable cheeks (6, 7) is rigidly fixed to a supporting arm (8) mounted so as to be capable of pivoting about the axis of rotation (X-X) of the disk (3).

3. Device in accordance with claim 2, characterized in that it comprises a rope line (12), one end of which is attached to the pivoted arm (8) for supporting the movable cheeks (6, 7) whilst its second end is attached to the upper portion (13) of the frame (1), with the result that the arm (8) pivots about its pivot-pin and maintains the cheeks (6, 7) at an approximately constant height when the casing (5) and the disk (3) move downwards.

4. Device in accordance with one of claims 2 and 3, characterized in that the casing (5) is provided with a radial recess (14) above the pivoted arm (8), in which said arm (8) and the cheeks (6, 7) are intended to engage in the extreme top position whilst the disk (3) and the casing (5) are in the extreme bottom position.

5. Device in accordance with any one of claims 2 to 4, characterized in that a second pair of movable cheeks is mounted on an arm which is pivoted on the axis of rotation of the disk (3), preferably symmetrically with respect to the first pair of movable cheeks (6, 7) and to their supporting arm (8) with respect to the diametral vertical plane perpendicular to the disk (3).

Fig.1   Fig.2

# Fig.3